# EUROPÄISCHE PATENTSCHRIFT

(11) **EP 1 837 265 B1**
(45) Veröffentlichungstag und Bekanntmachung des Hinweises auf die Patenterteilung: **30.05.2012**
(21) Anmeldenummer: 07005611.4
(22) Anmeldetag: 19.03.2007
(51) Int. Cl.: B62B 3/00, B62B 3/10

(54) **Transport- und Lagergestell**
Transport and storage shelving
Etagère de transport et de stockage

(30) Priorität: 21.03.2006 AT 4722006
(43) Veröffentlichungstag der Anmeldung: 26.09.2007
(73) Patentinhaber: Winkler, Josef, 3071 Böheimkirchen (AT)
(72) Erfinder: Winkler, Josef, 3071 Böheimkirchen (AT)

(56) Entgegenhaltungen:
- DE-A1- 19 535 874
- US-A- 2 746 882
- US-A- 2 760 647
- US-A- 3 224 787
- US-A- 3 519 286

## Beschreibung

Die Erfindung betrifft ein Transport- bzw. Lagergestell mit einer unteren Auflageebene und nach oben wegragenden Stehern, wobei wenigstens zwei Steher miteinander, zur Erzielung eines stabilen Rahmens, verbunden sind, und die zueinander parallelen Steher nach hinten geneigt sind, und wobei von den Stehern nach vorne wegragende Stützelemente vorgesehen sind.

Stangen- und Plattenmaterialien oder dergleichen werden z.B. während Produktionsprozessen zum Teil liegend und zum Teil stehend transportiert. Je nach Werkstücklage, -größe und -art finden dabei verschiedenste Transport- und Ablagegestelle Verwendung.

Eingangs erwähnte Gestelle mit nach hinten geneigten Stehern sind beispielsweise aus der US-A-3 224 787, US-A-3 519 286 sowie der US-A-2 760 647 bekannt. Durch die nach hinten geneigten Steher ist gegenüber vertikalen Stehern eine höhere Lagerstabilität der in dem Gestell gelagerten bzw. mit diesem transportieren Materialien gegeben.

Es ist eine Aufgabe der Erfindung, ein eingangs erwähntes Gestell für Transport den stehenden und liegenden Materialen, insbesondere platten- oder stangenförmigen Teilen dahingehend noch weiter zu verbessern, dass eine noch stabilere Lagerung von Materialien, insbesondere bei einem Transport der Materialien in dem Gestell möglich wird.

Diese Aufgabe wird mit einem eingangs erwähnten Gestell dadurch gelöst, dass erfindungsgemäß die Steher auch seitlich geneigt sind.

Das bisherige Anwendungsspektrum bekannter Gestelle wie eingangs beschrieben wird durch die bei dem erfindungsgemäßen Gestell vorgesehene zusätzliche seitliche Neigung der Steher noch wesentlich erhöht. Eine besonders stabile Lagerung und ein besonders sicherer Transport von Materialien wird mit dem erfindungsgemäßen Gestell möglich, da durch die seitlich geneigten Steher mit daran angebrachten Stützelementen (eine) weitere aus der Vertikalen weg geneigte Abstützebene(n) gebildet wird (werden), wo sich plattenförmige Elemente abstützen können, und wobei sich insbesondere stangenförmige Elemente sowohl an der hinteren Ebene als auch zusätzlich an einer seitlichen Ebene abstützen können, also gegen beide Ebenen nach hinten gelehnt werden können und somit wesentlich stabiler als bei lediglich nach hinten geneigter hinterer Ebene gelagert sind.

Das erfindungsgemäße Transport und Ablagegestell wird durch drei Arten von Begrenzungsebenen gebildet, einer unteren Auflageebene, einer hinteren Ebene, welche durch miteinander verbundene Steher gebildet wird, und seitlichen Ebenen, die durch Stützelemente, welche in den Stehern in dort angebrachten Bohrungen (Lochreihen) angebracht sind, gebildet sind. Das Gestell ist sowohl nach rückwärts als auch seitwärts geneigt.

Üblicherweise verläuft bei einem Gestell, welches auf einem ebenen, horizontalen Untergrund steht, die Auflageebene horizontal, die hintere und die seitlichen Begrenzungsebenen verlaufen vertikal.

Entsprechend der Erfindung sind nun einerseits die Steher aus der Vertikalen nach hinten geneigt, wobei "nach hinten" bedeutet, dass sie von dem vorne offenen Bereich, Ober weichen das Gestell befüllt wird, weg geneigt sind. Weiters sind die Steher aber auch noch seitlich gegenüber einer seitlichen Vertikalebene geneigt.

Damit können auch Teile, welche an den seitliche Ebenen lehnen, wie stehend gelagerte Stangenmaterialien, stabil gelagert werden.

Stehende Teile sind somit zuverlässig vor einem Kippen und liegende Teile vor einem Herausgleiten bzw. Herausrollen gesichert. Mit einem erfindungsgemäßen Gestell können somit mit einem einzigen Gestell und damit mit nur einer Type von Transport- und Ablagegestell verschiedenste Aufgaben gelöst werden.

Relativ einfach mit herkömmlichen Stützelementen lässt sich ein erfindungsgemäßes Gestell realisieren, wenn die nach vorne wegragenden Stützelemente senkrecht zu der durch die Steher gebildeten Ebene angeordnet sind.

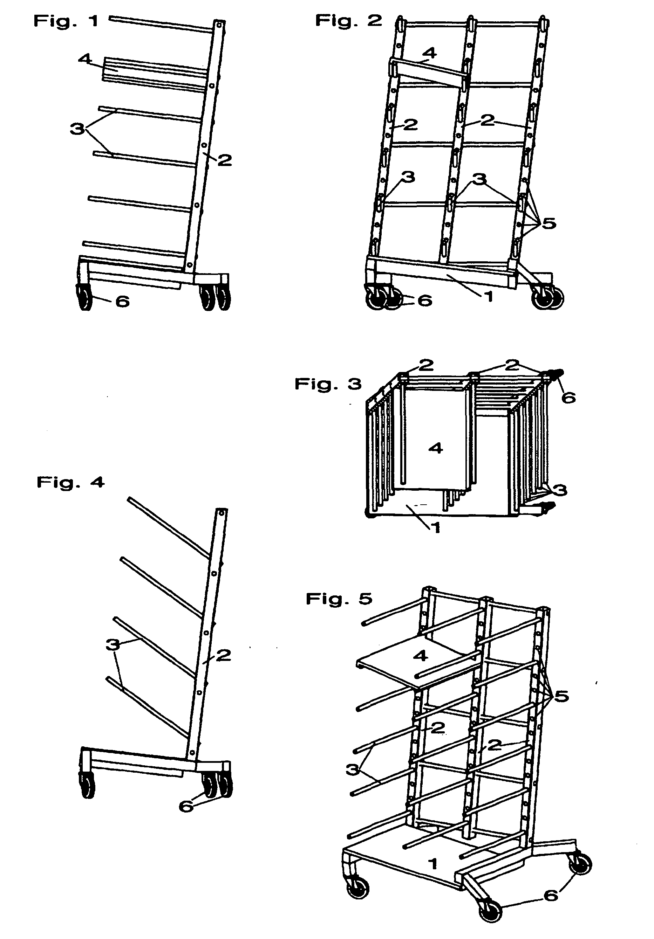

Eine noch stabilere Lagerung von Teilen in dem Gestell lässt sich erreichen, wenn die von den Stehern nach vorne wegragenden Stützelemente gegenüber einer Normalebene auf die durch die Steher gebildeten Ebene nach oben geneigt sind, da auf diese Weise die Steher noch stärker nach oben geneigt sind (Figur 4).

Weiters ist es von Vorteil, wenn die untere Auflageebene senkrecht zur hinteren, durch die Steher gebildeten Ebene und im wesentlichen senkrecht zu einer Ebene, die durch die von einem Steher nach vorne abstehenden Stützelementen gebildet wird, verläuft.

Außerdem ist es günstig, wenn an den Stützelementen zusätzliche Auflageebenen anbringbar sind.

An den Stehern sind zweckmäßiger Weise Lochreihen mit nach vorne gerichteten Bohrungen zur Aufnahme der Stützelemente vorgesehen.

Um das Transport- und Lagergestell einfach bewegen zu können, kann weiters vorgesehen sein, dass es auf drehbar gelagerten Rollen abgestützt ist.

Die Erfindung sowie weitere Einzelheiten der Erfindung sind an Hand der in der Zeichnung dargestellten Ausführungsbeispiele näher erläutert ohne sich darauf zu beschränken.

Im Folgenden ist die Erfindung an Hand der Zeichnung näher erläutert. In dieser zeigt
Fig. 1 eine Seitenansicht eines erfindungsgemäßen Transport- bzw. Lagergestells,
Fig. 2 eine Vorderansicht eines Gestells aus Figur 1,
Fig. 3 eine Draufsicht auf ein Gestell nach Figur 1 bzw. 2,
Fig. 4 eine Seitenansicht einer weiteren Ausführungsform eines erfindungsgemäßen Gestells mit schräg nach oben angeordneten Stützelementen, und
Fig. 5 eine perspektivische Ansicht eines Gestells aus Figur 1 - 3 von schräg Vorne.

Das erfindungsgemäße Transport und Lagergestell wird in der gezeigten nicht einschränkenden Ausführungsform durch drei im wesentlichen rechtwinkelig zueinander angeordnete Begrenzungsebenen gebildet, einer unteren Auflageebene 1, einer hinteren Ebene, welche durch miteinander verbundene Steher 2 gebildet wird, und seitlichen Ebenen (2 seitliche Begrenzungsebenen und eine mittlere Ebene), die durch Stützelemente 3, welche in den Stehern 2 in dort angebrachten Bohrungen 5 (Lochreihen) angebracht sind, gebildet sind.

Die untere Auflageebene 1, bei der es sich vorzugsweise um eine durchgehende Bodenplatte handelt, kann im Wesentlichen in einer Horizontalen liegen. Vorzugsweise weist die untere Auflageebene 1 aber eine Neigung wie dargestellt auf, normal auf die von den Stehen 2 gebildete Ebene, wodurch sich auf der Auflageebene 1 abgestellt oder abgelegte Teile noch stabiler lagern bzw. transportieren lassen.

Das Transport und Lagergestell, d.h. die Steher 2 sind sowohl nach rückwärts als auch seitwärts geneigt, abzulegende Teile können daher z.B. einfach neben eine seitliche Ebene (Begrenzungsebenen oder Mittelebene) in das Gestellt gestellt werden. Durch die Neigung kippen die Teile automatisch: Plattenmaterialien richten sich selbständig an einer der seitlichen Ebene aus, Stangenmaterialien sowohl an die seitliche als auch an die hintere Ebene. Dies stabilisiert die Teile und hält sie auch bei kleinen transportbedingten Erschütterungen in ihrer Lage. Eine stärkere Neigung der Bodenebene bzw. aller Ebenen verstärkt diesen Effekt.

Eine oder mehrere zusätzliche Ebenen wie z.B. die gezeigte Mittelebene, die im wesentlichen parallel zu den seitlichen Begrenzungsebenen angeordnet werden, ermöglichen die getrennte Ablage von verschiedenartigen Teilen (Bildung von Teilegruppen) bzw. ermöglichen eine Sortierung der abzulegenden Teile.

Die seitlichen Ebenen werden durch eine Reihe von Stützelementen 3, vorzugsweise Rohre, realisiert, die in Bohrungen 5 in die die rückwärtige Ebene bildenden Steher 2 angebracht sind und im wesentlichen rechtwinkelig von dieser abstehen. Die einzelnen Stützelemente 3, welche die seitlichen Ebenen bilden sind waagrecht in einer Ebene angeordnet, dass sie Etagen bilden. Daher können alternativ zur senkrechten Lagerung auch waagrecht, in diese durch die Stützelemente 3 entstehenden Etagen, Teile abgelegt werden.

Eine oder mehrere zusätzliche Auflageebenen 4, die zweCkmäßigerweise an den Stützelementen angebracht werden (z.B. aufgelegte Platten), die im wesentlichen parallel zu der unteren Auflageebene 1 angeordnet werden und über einen Teil oder die ganze Breite reichen, ermöglichen die Bildung von Etagen auch zur senkrechten Lagerung (zum Abstellen von kürzeren Teilen), dadurch wird die Ablagekapazität vergrößert.

In einer Ausführungsvariante Fig. 4 werden die Stützelemente 3 schräg nach oben weg angeordnet, so ist das Ablagegestell besonders zur liegenden Ablage für rohrförmige Teile geeignet da sie durch die größere Schräge besonders vor wegrollen gesichert werden.

Das Transport und Lagergestell ist auf Rädern 6 fahrbar ausgeführt, welche ausladend auf Stützen befestigt sind um die Ausladungen des Gestelles auszugleichen und so die Standfestigkeit zu sichern .

## Patentansprüche

1. Transport- bzw. Lagergestell mit einer unteren Auflageebene (1) und nach oben wegragenden Stehern (2), wobei wenigstens zwei Steher (2) miteinander, zur Erzielung eines stabilen Rahmens, verbunden sind, und die zueinander parallelen Steher (2) nach hinten geneigt sind, und wobei von den Stehern (2) nach vorne wegragende Stützelemente (3) vorgesehen sind, **dadurch** gekennzelchnet, dass die Steher (2) auch seitlich geneigt sind, wobei die nach vorne wegragenden Stülzelemente (3)
-) senkrecht zu der durch die Steher (2) gebildeten Ebene angeordnet sind, oder
-) gegenüber einer Normalebene auf die durch die Steher (2) gebildeten Ebene nach oben geneigt sind.

2. Gestell nach Anspruch 1, **dadurch gekennzeichnet, dass** die untere Auflageebene (1) senkrecht zur hinteren, durch die Steher (2) gebildeten Ebene und im wesentlichen senkrecht zu einer Ebene, die durch die von einem Steher nach vorne abstehenden Stützelementen (3) gebildet wird, verlauft.

3. Gestell nach Anspruch 1 oder 2, **dadurch gekennzeichnet, dass** an den Stützelementen (3) zusätzliche Auflageebenen (4) anbringbar sind.

4. Gestell nach einem der Ansprüche 1 bis 3, **dadurch gekennzeichnet, dass** in den Stehern (2) Lochreihen mit nach vorne gerichteten Bohrungen (5) zur Aufnahme der Stützelemente (3) vorgesehen sind.

5. Gestell nach einem der Ansprüche 1 bis 4, **dadurch gekennzeichnet, dass** das Transport- und Lagergestell auf drehbar gelagerten Rollen (6) abgestützt ist.

## Claims

1. Transport or storage rack with a lower supporting level (1) and uprights (2) rising upwards, where at least two uprights (2) are connected with each other to provide a stable frame, and the uprights (2) parallel to each other are inclined backwards, and where support elements (3) protruding forwards from the uprights (2) are envisaged, **characterised in that** the uprights (2) are also inclined laterally, whereby the supporting elements (3) protruding forwards
-) are arranged perpendicularly to the level formed by the uprights (2), or
-) are inclined upwards towards a standard level on the level formed by the uprights (2).

2. Rack according to Claim 1, **characterised in that** the lower supporting level (1) runs perpendicularly to the rear level formed by the uprights (2) and essentially perpendicularly to a level formed by the support elements (3) standing forwards of a upright.

3. Rack according to Claims 1 or 2, **characterised in that** additional supporting levels (4) can be applied to the support elements (3).

4. Rack according to one of the Claims 1 to 3, **characterised in that** a series of holes is envisaged in the uprights (2), with bore holes (5) pointing forwards for receiving the support elements (3).

5. Rack according to one of the Claims 1 to 4, **characterised in that** the transport and storage rack is supported on rotating castors (6) with bearings.

## Revendications

1. Cadre de transport et de stockage avec un niveau de stockage (1) inférieur et des montants (2) dirigés vers le haut, dont deux montants (2) au minimum sont reliés entre eux pour obtenir un cadre stable, et les montants (2) parallèles entre eux étant inclinés vers l'arrière, des éléments d'appui (3) orientés vers l'avant étant prévus à partir des montants (2) **caractérisés en ce que** les montants (2) sont également inclinés latéralement, les éléments d'appui (3) orientés vers l'avant,
-) perpendiculaires au niveau formé par les montants (2), ou
-) inclinés vers le haut par rapport à un niveau normal sur le niveau formé par les montants (2).

2. Cadre selon la revendication 1, **caractérisé en ce qu'**un niveau de stockage (1) inférieur est perpendiculaire au niveau arrière formé par les montants (2) et principalement perpendiculaire à un niveau formé par les éléments d'appui (3) partant d'un montant vers l'avant.

3. Cadre selon la revendication 1 ou 2, **caractérisé en ce que** des niveaux de stockage (4) supplémentaires peuvent être installés sur les éléments d'appui (3).

4. Cadre selon l'une des revendications 1 à 3, **caractérisé en ce que** des rangées de trous avec des perçages (5) orientés vers l'avant sont prévues dans les montants (2) pour recevoir les éléments d'appui (3).

5. Cadre selon l'une des revendications 1 à 4, **caractérisé en ce que** le cadre de transport et de stockage repose sur des roulettes (6) orientables sur roulement.
